# EUROPEAN PATENT SPECIFICATION

(11) **EP 2 835 738 B1**
(45) Date of publication and mention of the grant of the patent: **22.01.2020**
(21) Application number: 13179316.8
(22) Date of filing: 05.08.2013
(51) Int. Cl.: G06F 8/41, G06F 9/455

(54) **Method and parallelization detection device for detecting parallelism in a sequential program**
Verfahren und Parallelisierungserkennungsvorrichtung zur Erkennung von Parallelität in einem sequenziellen Programm
Procédé et dispositif de détection de parallélisation destiné à être utilisé dans un programme séquentiel

(43) Date of publication of application: 11.02.2015
(73) Proprietor: Technische Universität Darmstadt, 64289 Darmstadt (DE)
(72) Inventor: Jannesari, Ali, 52066 Aachen (DE); Li, Zhen, 52062 Aachen (DE); Wolf, Felix, 52070 Aachen (DE)
(74) Representative: 2K Patentanwälte Blasberg Kewitz & Reichel

(56) References cited:
- US-A1- 2011 265 067
- MOON S ET AL: "EVALUATING AUTOMATIC PARALLELIZATION IN SUIF", IEEE TRANSACTIONS ON PARALLEL AND DISTRIBUTED SYSTEMS, IEEE SERVICE CENTER, LOS ALAMITOS, CA, US, vol. 11, no. 1, 1 January 2000 (2000-01-01), pages 36-49, XP000903747, ISSN: 1045-9219, DOI: 10.1109/71.824639
- BOBBIE P O: "PARTITIONING PROGRAMS FOR PARALLEL EXECUTION: A CASE STUDY IN THE INTEL IPSC/2 ENVIRONMENT", INTERNATIONAL JOURNAL OF COMPUTERS & APPLICATIONS, ACTA PRESS, ANAHEIM, CA, US, vol. 19, no. 2, 1 January 1997 (1997-01-01), pages 84-96, XP000731073, ISSN: 1206-212X

## Description

### Field of the invention:

The invention relates to a method, a parallelization detection device and a related computer program product for providing parallelism in sequential programs.

### Background of the invention:

Stagnating performance of uni-processors together with the prevalence of multicore processors on today's desktops and servers leaves parallelism as the main vehicle for further improving program speed. Unfortunately, writing efficient parallel code is still an art mastered only by experienced programmers. In particular, the parallelization of the myriads of sequential legacy programs that exist today presents a major technical and economic challenge. This is especially true given that today software development is mostly the transformation of programs written by someone else rather than starting from scratch. Known approaches of detecting parallelism in sequential programs suffer from severe drawbacks.

The paper of S. Garcia, D. Jeon, C. M. Louie, and M. B. Taylor, "Kremlin: rethinking and rebooting gprof for the multicore age;" in Proceedings of the 32nd ACM SIGPLAN conference on Programming language design and implementation, sero PLDI '11. New York, NY, USA: ACM, 2011, pp. 458-469, discloses a method to determine whether a region or construct with a given entry and exit point within a sequential program can be parallelized.

The disclosed method of Garcia et al. has a lower chance of detecting parallelization potential in sequential programs.

MOON S ET AL: "EVALUATING AUTOMATIC PARALLELIZATION IN SUIF", IEEE TRANSACTIONS ON PARALLEL AND DISTRIBUTED SYSTEMS, IEEE SERVICE CENTER, LOS ALAMITOS, CA, US, vol. 11, no. 1, 1 January 2000 (2000-01-01), pages 36-49, XP000903747, ISSN: 1045-9219, DOI: 10.1109/71.824639 presents an evaluation of the Stanford SUIF compiler. SUIF detects DOALL loops during compile time, and transforms such loops into parallel code. The paper tries to see whether there is any parallelism not discovered by SUIF. To perform the evaluation, the authors use "Extended Lazy Privatizing DOALL" (ELPD) test. The method instruments accesses to arrays, and utilizes data dependencies to find DOALL loops that are missed by SUIF.

BOBBIE P O: "PARTITIONING PROGRAMS FOR PARALLEL EXECUTION: A CASE STUDY IN THE INTEL IPSC/2 ENVIRONMENT", INTERNATIONAL JOURNAL OF COMPUTERS & APPLICATIONS, ACTA PRESS, ANAHEIM, CA, US, vol. 19, no. 2, 1 January 1997 (1997-01-01), pages 84-96, XP000731073, ISSN: 1206-212X discloses a method to prepare (partition) a program for parallelization via message passing, seeking to reduce interprocessor (or inter-process) communication by increasing the locality of both data usage and control-flow dependencies. The method adopts syntax-driven data dependency analysis, and detects parallelism based on Bernstein's thesis. In the end, it uses bipartite graph matching to partition the code.

US2011265067A1 presents a JIT compiler that automatically parallelizes loops with cross-iteration dependencies. It implements a "tracing JIT" (TJIT). The TJIT identifies hot loops during execution, records a trace for at least one group of iterations, and decides whether the iterations in the group can be assigned to a group of plural processing resources based on one obtained trace.

### Summary of the invention:

An objective of the present invention is to provide an improved method, parallelization detection device and computer program product for providing parallelism in sequential programs.

This objective is achieved by a method as claimed in claim 1, by a parallelization detection device as claimed in claim 8 and by a computer program product as claimed in claim 10.

In a first aspect a method of detecting parallelism in a sequential program is presented, the method comprising the steps of:
- loading the sequential program to a parallelization detection device;
- executing the sequential program under control of the parallelization detection device;
- automatically determining a control region in the sequential program by means of the parallelization detection device (700);
- automatically detecting a first computational unit in the sequential program by means of the parallelization detection device, by means of
   - automatically detecting a program step of reading a first program state from a memory device;
   - automatically detecting a program step of computing a second program state based on the first program state; and
   - automatically detecting a program step of writing the second program state to the memory device.
- automatically indicating the detected computational unit by means of the parallelization detection device.

The sequential program is loaded to a parallelization detection device to determine the structure of the sequential program and to execute the sequential program step by step under the control of the parallelization detection device. The execution of the sequential program is treated as an instruction stream interrupted by calls to previously inserted instrumentation functions to identify dependencies. In comparison to static methods, this so called dynamic approach may identify control and data dependencies accurately, that is, only if they really exist at runtime. First the control dependencies are determined in order to determine the control regions. A look-ahead technique is used to determine a re-convergence point when a branch is encountered. The re-convergence point is the point where the different branch alternatives of the sequential program end and unconditional execution resumes. Before the real branch is executed, every possible branch is tried first, and this look-ahead is terminated when a re-convergence point is encountered, which is the first instruction that comes after a control region. The re-convergence point is searched for in "look-ahead" mode. This means, while searching, all instrumentation related to memory accesses is disabled and all intermediate values and program states are stored separately on a scratchpad. After following all branches up to the re-convergence point, the real branch is executed in normal mode.

The approach works at the granularity of so-called computational units (CUs), which are small sequences of related instructions within a control region of the sequential program that usually offer very little internal parallelization potential. CUs follow the read-compute-write pattern: a program state is first read from memory, the new state is computed, and finally written back. There may be even a second or further write step overwriting the previous write step such that the previous write step does not have any effect. Therefore, there are no true data dependencies inside a CU that are relevant to the flow of data. The instructions building a CU are not necessarily arranged one after the other. It may be, for example, that the steps of reading the first program state and the step of computing a second program state based on the first program state are arranged one after the other in the sequential program but one or more following program step(s) are not the step of writing the second program state to the memory device. The steps of reading the first program state and the step of computing a second program state based on the first program state build an incomplete CU until the step of writing the second program state to the memory device is detected. The program steps of reading the first program state, computing a second program state based on the first program state and writing the second program state to the memory device are finally merged to the CU after detecting the step of writing the second program state to the memory device. It may, for example, be that a further CU is started before the step of writing the second program state to the memory device is determined. The restructuring into CUs allows the dependencies within the sequential program to be disentangled. Further details are described and discussed with respect to Algorithm 2 (see below).

The method may thus have the advantage that a new language-independent code-granularity level for both program analysis and reflection of parallelism is determined by means of the CU. The chance of detecting potential parallelism within the sequential program may thus be increased because the granularity is not determined by means of fixed entry and exit points. The result may be presented to a computer programmer by means of a display or any other device which may be suitable to indicate the detected CU in the sequential code. The computer programmer may use the indicated result to recognize whether the sequential program is worth to be parallelized and where the parallelization should be started. Alternatively or in addition, the information regarding the control region(s) and the CU or the multitude of CUs within the control region may be indicated by storing the information for subsequent processing.

According to a further embodiment of the method, the method comprises the further step of:
- automatically detecting at least a second computational unit, whereby the first computational unit is started in the sequential program prior to the second computational unit;
- automatically determining whether the second computational unit is a dependent computational unit comprising a program step of reading the second program state computed by the first computational unit.

CUs may only be executed in parallel if there is no true data dependency between, for example, two, three, four or more CUs. CU₂ started after CU₁ may, for example, depend on a program state computed by CU₁ such that CU₂ can only be started after CU₁ is finalized because there is a true data dependency between CU₂ and CU₁. Presenting such potential dependencies among CUs within a control region and also across the boundaries of control regions to a computer programmer by indicating the related information may accelerate and simplify coding of parallel versions of sequential programs. Alternatively or in addition, the method may comprise the further step of automatically linking CU₁ and CU₂ to a CU chain if CU₂ depends on CU₁ and CU₂ does not depend on another CU. No link is created in the case that CU₂ depends on more than one CU because all CUs that CU₂ depends on have to be executed prior to the execution of CU₂. The dependencies discussed within the framework of this disclosure are so called direct dependencies. This means, for example, that no other CU depending on CU₁ is started between CU₁ and CU₂ in the sequential program. There is no intermediate CU such that CU₂ depends on CU₁ via the intermediate CU.

Linking means that a dependency and the direction of the dependency between CU₁ and CU₂ is indicated. CU₂, for example, has to be executed after CU₁ because CU₂ depends on a program state computed by CU₁ the link thus points from CU₂ to CU₁. This procedure of creating a link between two CUs can be imagined as marking the direct dependency that exists between these CUs. CU₂ and CU₁ may even belong to different control regions. Furthermore, a further CU may be linked to the CU chain by means of the parallelization detection device by creating a link from the further CU to the last CU (CU₂ in this case) of the CU chain as long as the further CU depends on the CU chain as described above and does not depend on other CUs. The further CU is appended to the CU chain. The CU chain may thus finally comprise two, three, four or more CUs until no further suitable dependent CU is detected by means of the parallelization detection device. CU chains thus form a linear chain of CUs without any branches.

In the case that it is detected that there are two, three, four or more subsequent CUs to a further CU depending on the further CU, the further CU may be referred to as branching point and may be the last CU to be linked to the CU chain in order to build a closed CU chain. The subsequent CUs represent different branches and linking further CUs within the branches may be started with the first CU of each branch excluding the CU the subsequent CUs in the branches depend on.

In an alternative approach the branching point may not be linked to the CU chain. The CU chain would be closed in this case directly prior to the branching point. All subsequent closed CU chains would comprise the CU building the branching point. The branching point would be the first CU of the subsequent closed CU chains of the branches started at the branching point. The latter would have the effect that the branching point is executed in each of these closed CU chains.

In another approach also the CUs prior to the branching point may be linked. This may result in at least as much closed CU chains as branches comprising CUs of the branches, the branching point and CUs prior to the branching point. The consequence would be that CUs prior to the branching point and the branching point may be replicated for each closed CU chain. This may be undesirable in view of computation time. Furthermore, there may be even further branches within the branches.

According to a further embodiment of the method, the method comprises the further steps of:
- automatically detecting at least a second closed chain of computational units; and
- automatically indicating by means of the parallelization detection device if the second closed chain of computational units is independent of the first closed chain of computational units.

A number of closed CU chains may be detected within one control region or different control regions by means of the parallelization detection device as described. One, two, three or more closed CU chains may be indicated. The related information may be presented to the computer programmer or stored for subsequent automatic processing. Closed CU chains can be executed in parallel if they do not depend on each other - neither directly nor indirectly. Closed CU chains may, for example, depend on each other if there is a branching point. The closed CU chain prior to or comprising the branching point cannot be executed in parallel to the closed CUs of the branches. This does not apply if all closed CUs comprise the CUs prior to the branching point. Parallelization of the sequential program may be started by adding instructions to process the closed CU chains within or across control regions in parallel. The number of parallelized branches may depend on the number of closed CU chains, the number of available computer processors or processor cores and computation time needed to execute the individual closed CU chains. Anyhow, it may be that there is no second closed CU chain because the part of the sequential program does not contain any parallelism at all.

According to a further embodiment of the method, the method comprises the further steps of:
- automatically detecting a synchronization point; and
- automatically indicating by means of the parallelization detection device the synchronization point.

The sequential program may need the results computed within the different closed CU chains for subsequent processing. The parallelization detection device may detect an instruction needing at least two of the second program states of the detected closed CU chains. This instruction is a synchronization point where the processing of the program has to be stopped until the closed CU chains computing the relevant computing states are completed. The computer programmer may use the indicated information regarding the synchronization point to synchronize the parallelized version of the sequential program by introducing synchronization instructions preferably directly prior to the synchronization point.

According to a further embodiment of the method, the method comprises the further steps of:
- automatically detecting by means of the parallelization detection device a computation time needed to execute the first closed chain of computational units and/or the at least second closed chain of computational units; and
- automatically indicating the computation time by means of the parallelization detection device.

The computation time needed to execute one of the closed CU chains may be a valuable indicator for a computer programmer or for an automatic code transformator to organize the parallelization of the sequential program. If there are, for example, two available identical computer processors and the computation time of a first closed CU chain is around two times longer than the computation time of a second closed CU chain and a second closed CU chain it may be advantageous to arrange the parallel version of the sequential program such that the first closed CU chain is processed on the first computer processor whereby the second and the third closed CU chain are processed one after the other on the second computer processor. The capacity of the computer processors may thus be used in the most efficient way and processing of the parallelized version may be faster. A further indicator for the computation time and for the parallelization may be the number of iterations the code belonging to a closed CU chain may be executed, e.g., in a loop. Iterations means in this respect independent iterations of the closed CU chain like, for example, the multiplication of two values whereby the first value may be constant and the second value may change in each iteration but does not depend on any result of any previous iteration. Each iteration would thus form a closed CU chain in its own right and could in principle be executed in parallel to the other iterations. Anyhow, in reality there is only a limited number of processors such that only a limited number of closed CU chains can be executed in parallel. It may thus make sense to split, for example, 400 closed CU chains (iterations) into 4 chunks of 100 closed CU chains (iterations) which may be processed in parallel on, for example, 4 processor cores. The latter may nearly quarter the processing time of all iterations. The number of instructions of the closed CU chains may be used alternatively or in addition in order to detect the computation time of the closed CU chain. The computation time of the closed CU chains may linearly depend on the number of instructions if processing of each instruction needs the same computation time. The latter means, for example, that a parallel version of a sequential program may be arranged in a way that a first closed CU chain with 40 instructions may be processed on a first computer processor whereby a second closed CU chain with 15 instructions and third closed CU chain with 25 instructions are processed one after the other (sequentially) on a second computer processor in parallel to processing the first closed CU chain. In a more sophisticated approach the instructions may be divided into different classes. Each class of instructions may comprise instructions needing comparable computation times. The total computation time may thus be determined by multiplying the number of instructions within a certain class of instructions comprised by a closed CU chain with the computation time associated with the respective class of instructions. The latter is repeated for all other instruction classes comprising instructions included in the closed CU chain such that the sum may be a good estimate of the total computation time needed to process the closed CU chain. The computation time associated with a class of instructions may be an absolute time for processing such instructions on a defined processor or it may be relative computation time in comparison to the other classes of instructions.

According to a further aspect of the present invention a parallelization detection device is presented. The parallelization detection device comprises memory means for loading a sequential program, the parallelization detection device further comprises control means for executing the sequential program under control of the control means, the parallelization detection device further comprises detection means for determining a control region, the detection means being further adapted to detect at least one computational unit in the sequential program, whereby the computational unit comprises a program step of reading a first program state from a memory device, a program step of computing a second program state based on the first program state and a program step of writing the second program state to the memory device, and the parallelization detection device further comprises indication means for indicating the computational unit.

The memory means for loading the sequential may be different from the memory device where the first and the second program state are stored in.

According to a further embodiment of the parallelization detection device, the detection means being further adapted to determine whether at least a second computational unit started after a first computational unit is comprised in the sequential program. The second computational unit comprises a program step of reading the second program state computed by the first computational unit, the parallelization detection device further comprises linking means for linking the first and the at least second computational unit to a chain of computational units if the at least second computational unit comprises a program step of reading the second program state computed by the first computational unit. The indication means being further adapted to indicate the chain of computational units as closed chain of computational units if no further computational unit comprises a program step of reading a second program state of the chain of computational units or if a further dependent computational unit is a computational unit depending on at least two computational units. There may be only one closed chain of computational units within a sequential program or there may be two, three, four or a multitude of closed chains of computational units.

According to a further embodiment of the parallelization detection device, the parallelization detection device further comprises synchronization means for detecting a synchronization point of the sequential program. The synchronization point may be determined within the determination of the control region or using a second program state of a first closed chain of computational units and a second program state of at least a second closed chain of computational units, and the indication means being adapted to indicate the synchronization point. The synchronization point denotes the beginning of a CU depending on at least two preceding CUs. Such CUs depending on at least two preceding CUs are called re-convergence point - this time with respect to data dependencies.

The memory means, control means, detection means, linking means and synchronization means may be separate units realized by specialized circuit arrangements. Alternatively two or all of the memory means, control means, detection means, linking means and synchronization means may be realized, for example, by means of one or more processor units and/or one or more memory devices. The processor unit(s) and memory device(s) may be operated by means of a dedicated computer program enabling the described functionalities of the memory means, control means, detection means, linking means and synchronization means. The indication means may be any display, audio device or memory for indicating the detected potential parallelism to a computer programmer or to a further device for automatic parallelization of the sequential program.

In another aspect of the present invention a computer program product stored on a computer-readable medium or downloaded from a network is presented, the computer program product comprises code means for producing the steps of method as claimed in any of claims 1 - 11 when run on the accordingly adapted parallelization detection device.

The method, the parallelization detection device and the computer program product presented above do have the advantage that the detection of parallelism in a sequential program is based on a bottom up approach. The detection is performed based on very small elements of a sequential program, the computational units, which may be used for parallelizing the sequential program. The detection of parallelism may not depend on a more or less arbitrary selection of entry and exit points in a top down approach. The chance of detecting all or nearly all potential parallelism in a sequential program may thus be enhanced.

It shall be understood that the method of claim 1, the parallelization detection device of claim 11 and the computer program product of claim 14 have similar and/or identical embodiments, in particular, as defined in the dependent claims.

It shall be understood that a preferred embodiment of the invention can also be any combination of the dependent claims with the respective independent claim.

Further advantageous embodiments are defined below.

### Brief description of the drawings:

These and other aspects of the invention will be apparent from and elucidated with reference to the embodiments described hereinafter.

The invention will now be described, by way of example, based on embodiments with reference to the accompanying drawings.

In the drawings:
Fig. 1 shows a sequential code section
Fig. 2 shows the process of detecting a CU
Fig. 3 shows dependent CUs
Fig. 4 shows a sequential code section with task parallelism
Fig. 5 shows closed CU chains within the code section with task parallelism shown in Fig. 4
Fig. 6 shows another example of dependencies between CUs
Fig. 7 shows a process flow of detecting closed CU chains
Fig. 8 shows a principal sketch of a parallelization detection device
Fig. 9 shows a more complex example of dependencies between CUs
Fig. 10 shows closed CUs according to one approach discussed in the description of Fig. 9

### Detailed description of embodiments:

Various embodiments of the invention will now be described.

### General Approach

The tool for automatically finding potential parallelism in sequential programs is called DiscoPoP (Discovery of Potential Parallelism). The input of DiscoPoP is the executable file of a sequential program with debug information. As output, DiscoPoP writes a report telling which parts of the program could run in parallel. In theory, these conclusions may only be valid for this particular run. In practice, however, many will also apply to other runs with different inputs. The method consists of two major steps. In the first step, DiscoPoP builds a CU graph indicating all CUs. In the second step, DiscoPoP derives potential parallelism from the CU graph built in step 1 by detecting and indicating dependencies and potential links between CUs. Currently, step 1 and step 2 are applied to each control region while executing the input program under the control of DiscoPoP. It basically alternates between the two steps in short intervals defined by control region boundaries. Alternatively, step 1 first could be performed for the whole program and then step 2 could be performed offline. The choice between these two options does not affect the correctness of the algorithm. Applying the whole analysis region by region has lower memory consumption, since it allows a part of the memory used for previously processed regions to be reclaimed.

While the sequential target program is executed under the control of the tool, the instruction stream is read and data and control dependencies are tracked. The instruction stream is transformed into a graph of CUs whose edges are true data dependencies. To build the CU graph, DiscoPoP reads the instruction stream and tracks data and control dependencies simultaneously on-the-fly. For each control region, new CUs are built whenever control-flow and data-flow analysis are finished. For control-flow analysis, jump operations are instrumented. To handle nested regions, a stack is used to record the starting point and the end point of control regions. The end point of a control region is obtained using the look-ahead technique described below. Details of the control-flow analysis algorithm can be found in Algorithm 3 below. Note that an incomplete CU from an inner nested control region will not be merged with a closing write instruction within an outer nested control region. They will become a part of the overall CU graph without modification. Thus, CUs never cross control-region boundaries. However, dependency edges or links are possible between inner and outer regions. Data flow analysis is done by instrumenting read and write operations (see Figs. below). Details of the data-flow analysis algorithm can be found in Algorithm 4.

Algorithm 1 puts all pieces together. It uses three functions:
- Build CU(Operation opᵢ, Control Region R)
- Control Flow Analysis (Operation op)
- Data Flow Analysis (Operation op)

In the following, first the overall algorithm will be shown, followed by the three functions it uses.

### Building the CU Graph

### Definition of a CU:

- CUs follow the read-compute-write pattern: a program state is first read from memory, the new state is computed, and finally written back. Therefore, there are no true data dependencies within CUs (excluding temporary variables).
- The operations of a computational unit are related through anti-dependencies (write after read).

Note that temporary variables are excluded from the notion of a program state and, thus, from building CUs. A CU is defined based on the read-compute-write pattern because it is the intention to reflect the change of program states. However, temporary variables have only an auxiliary function during state transitions. They do not reflect real program states, but rather store intermediate states which are not of interest in the context of this approach. Including temporary variables would lead to the illusion that the target program consists of many states and the transition among them is complex. Although temporary variables are shown in CUs when CUs are reflected on the source-code level, dependencies on such variables are simply ignored.

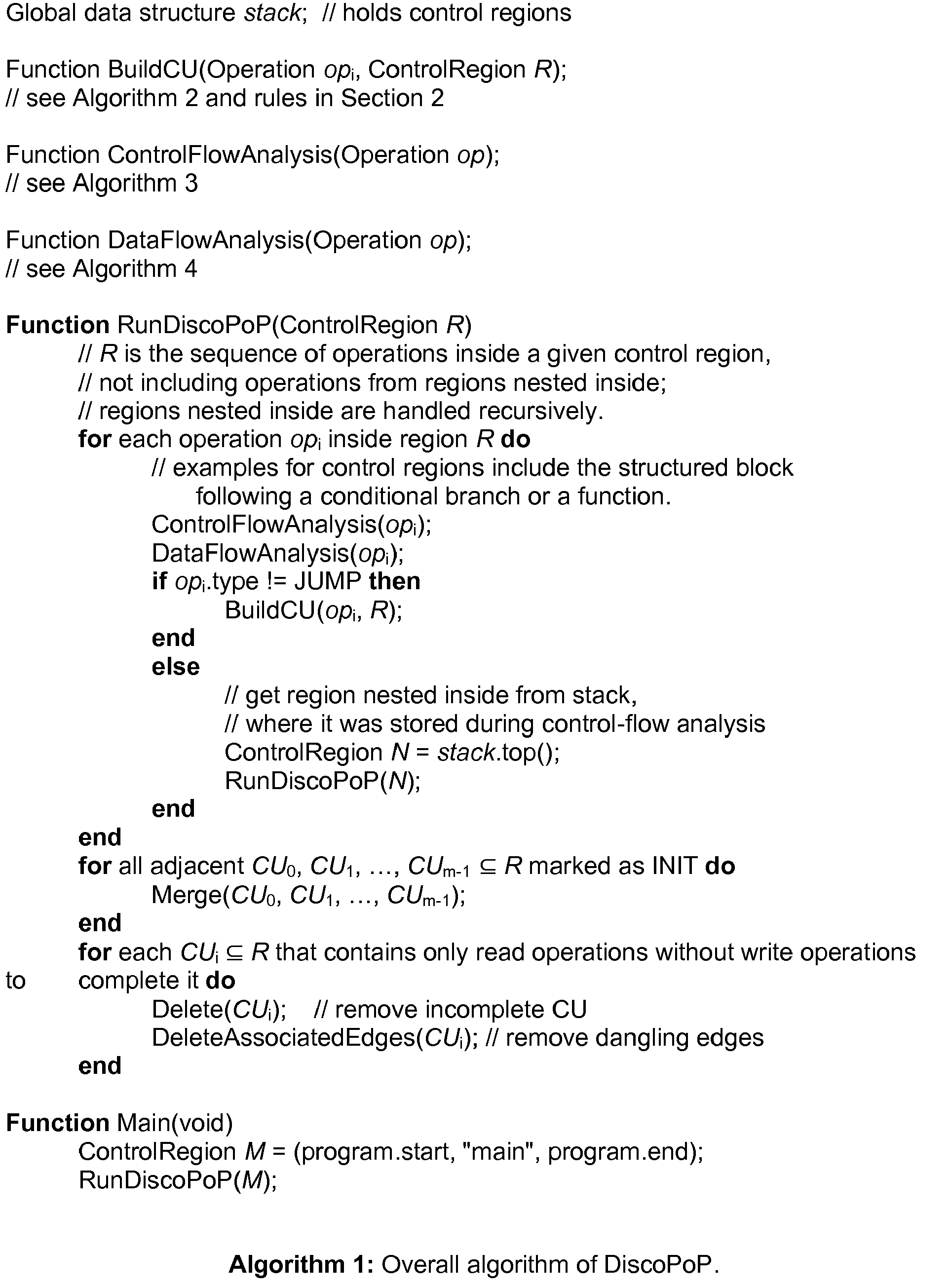

Given that both control and data dependencies are available, the isolation of CUs can be performed. The basic idea is that a write operation is much more important than a read operation when trying to find parallelism. Whenever a write operation happens, the dependencies of the written variable are checked and its further use is observed. Based on these criteria, CUs can be computed automatically using the online algorithm below, which is recursively applied to the operations of the current control region, starting with the main function.

Imagine the execution of the program as a sequence of dynamic operations (instructions) {op₀,op₁ ... ,opₙ₋₁}. Let R be the subsequence of these operations that belong to the current control region, not including operations belonging to regions nested inside. Let us assume we have already processed all operations in R up to but not including opᵢ. Then we can apply the following algorithm to opᵢ and all remaining operations in R:
1) When a new control region is encountered nested inside the current one, the current region is suspended until the region nested inside is processed.
2) When an operation opᵢ e R is executed:
   - If the variable v that opᵢ operates on is defined in another variable's use, ignore opᵢ; and exclude dependencies on v for building CUs. Otherwise a CU is built that just contains opᵢ
   - The CU of opᵢ is merged with all the CUs of dynamic operations op_{j<i} ∈ R that opᵢ directly depends on via anti-dependencies.
   - If opᵢ directly depends on op_{j<i} via a true data dependency, a directed edge is created from the CU of opᵢ to the CU of opⱼ, expressing that opᵢ truly depends on opⱼ. Note that opᵢ does not necessarily have to be an element of R.
   - If opᵢ is the first write of a variable in R, we mark it as initialization.
   - Repeat the algorithm for all remaining operations in R.
3) At the end, merge the CUs of all adjacent initialization operations into one INIT node. Adjacent means that their operations form a contiguous subsequence of R.

Note that intermediate variables that were introduced to make the code more readable, but which are not essential to describe the state of the program, are ignored. Considering them would make the granularity of CUs finer down to the level of individual instructions, where reasoning about parallelism in a meaningful way becomes difficult for the programmer. In particular, the boundaries of computational units could break individual source-code statements. When opᵢ is ignored because it operates on v, which is defined in w's use, the association of opᵢ with the current CU of w (i.e., the CU which only contains read operations of w, waiting for a write operation) will be saved. When representing CUs later on the source-code level, this association will allow the full code coverage to be restored, including the code for opᵢ.

Moreover, a CU is not able to cross control-region boundaries. Of course, dependency edges or links between different control regions are possible. Furthermore, if a variable is written several times and no read occurs in between, the first write is used to terminate the CU and the last written value is kept. All write operations in between are ignored, since their values are overwritten. Finally, all read-after-read dependencies are ignored.

To illustrate the process described above more clearly, a pseudo-code algorithm is provided (Algorithm 2).

### Control-Flow Analysis

A pseudo-code algorithm for control flow analysis is provided in Algorithm 3. To allow parallelism detection to be performed on varying levels of code granularity, CUs are not allowed to cross control-region boundaries. To ensure this, DiscoPoP needs to track control dependencies. A control dependency between two instructions opᵢ and opⱼ exists if opᵢ is conditionally guarded by opⱼ. However, to decide whether an instruction is conditionally guarded DiscoPoP needs to know the re-convergence point (or synchronization point), which is the point where the different branch alternatives end and unconditional execution resumes. It is generally difficult to find the re-convergence point because not all branches of the program are executed. For example, for an if-else structure, either if or else is executed, thus, the analysis algorithm does not know of the existence of the other branch, which, however, is necessary to identify the re-convergence point.

A look-ahead technique, which can find the re-convergence point dynamically, solves this problem. Before the real branch is executed, we follow all possible branches first without actually executing them, and this look-ahead is terminated when a re-convergence point is encountered, which is the first instruction that comes after a control region. The re-convergence point is searched for in "look-ahead" mode. This means, while searching, all instrumentation is disabled. After the re-convergence point has been found, the real branch is executed in normal mode.

The tool is based on an instrumentation framework for building dynamic analysis tools called Valgrind. The look-ahead technique is implemented by enabling Valgrind's translate function to run in look-ahead mode until the re-convergence point of the control structure is reached. Cf. Nethercote and J. Seward, "Valgrind: a framework for heavyweight dynamic binary instrumentation," SIGPLAN Not., vol. 42, no. 6, pp. 89-100, Jun. 2007, which is incorporated by reference.

### Data-Flow Analysis

Data dependencies fall into one of four categories: true dependencies (read after write or short RAW), antidependencies (write after read or short WAR), output dependencies (write after write or short WAW) and input dependencies (read after read or short RAR). We insert instrumentation calls for all reads and writes of both memory and registers and record data dependencies in shadow memory. For every variable, we maintain a field called last write operation, which is updated whenever the variable is written. A method to build data dependencies is adopted. A pseudo-code algorithm of the data-flow analysis is presented in Algorithm 4.

### Detection of Parallelism

After creating the CU graph of the program (or a part of it), the discovery of parallelism can be started.
1. If CU₂ truly depends on CU₁, then CU₁ must be executed before CU₂. They cannot run concurrently.
2. Different closed CU chains or paths of the CU graph can be executed in parallel after inserting a synchronization barrier into the common node where these paths join. If they do not join, no barrier is necessary. 3. A loop in the user program cannot be parallelized if there is a CU inside the loop that holds a variable without an INIT node preceding it.

After the process of building and linking CUs, the program is represented as a directed graph. Nodes of this graph are CUs, and directed edges are direct true dependencies. Some of the edges are marked as links as discussed above. Obviously, there are paths in this graph. A given path has always a direction, which means that all CUs on this path must be executed in order. This is expressed in rule 1.

Furthermore, CUs on different paths or within independent closed CU chains can be executed in parallel because there is no edge between them. However, paths may join at some node, which means before executing this CU, a barrier must be inserted to preserve correctness. This is expressed in rule 2. To know which CUs are on different paths, the Foata Normal Form (FNF) is calculated for a given CU graph FNF is a normalized representation of traces in trace theory. There, a trace is defined as an equivalence class of strings according to a given independence relation. The FNF divides a trace in stages based on the independence relation, and every stage is a set of letters sorted from left to right by cardinality. A CU graph is treated as an ordered string, called trace, and each CU identifier in the trace is called a letter. A well-known algorithm was adopted to calculate the FNF. It uses a group of stacks, one stack for each distinct letter the trace contains. The algorithm scans the trace from right to left, pushing the current letter on the corresponding stack and a marker on all other stacks whose letters are not commutable with the current letter. After parsing the trace, the stack elements are popped to find the maximum size of FNF stages (maximum cardinality). The maximum size of FNF stages indicates the maximum number of CUs that can run in parallel.

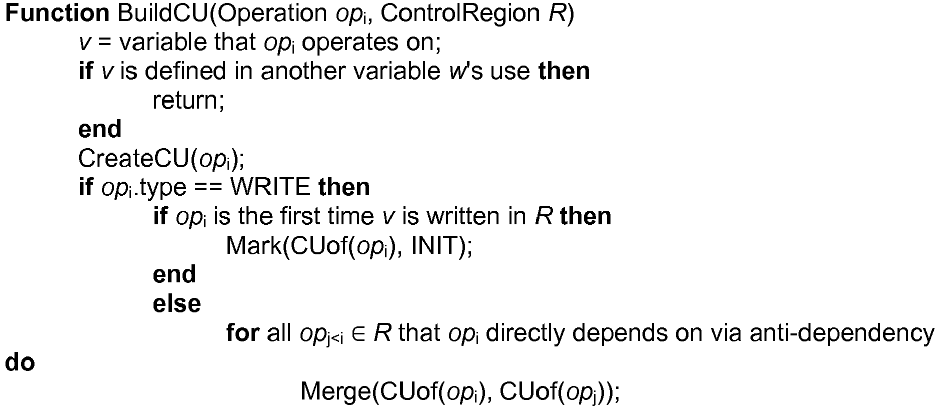

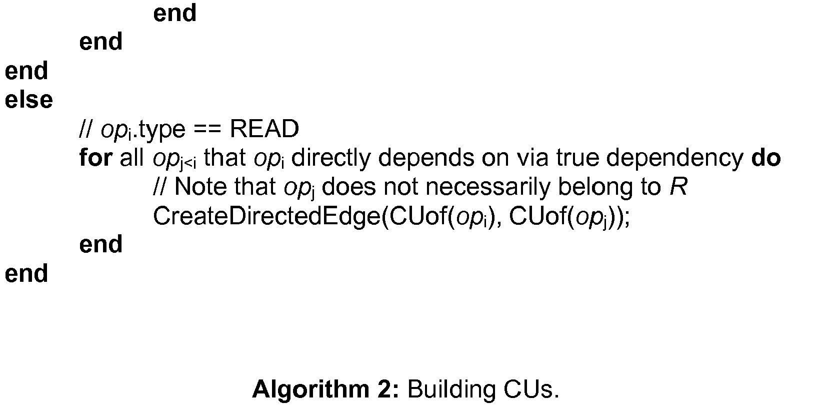

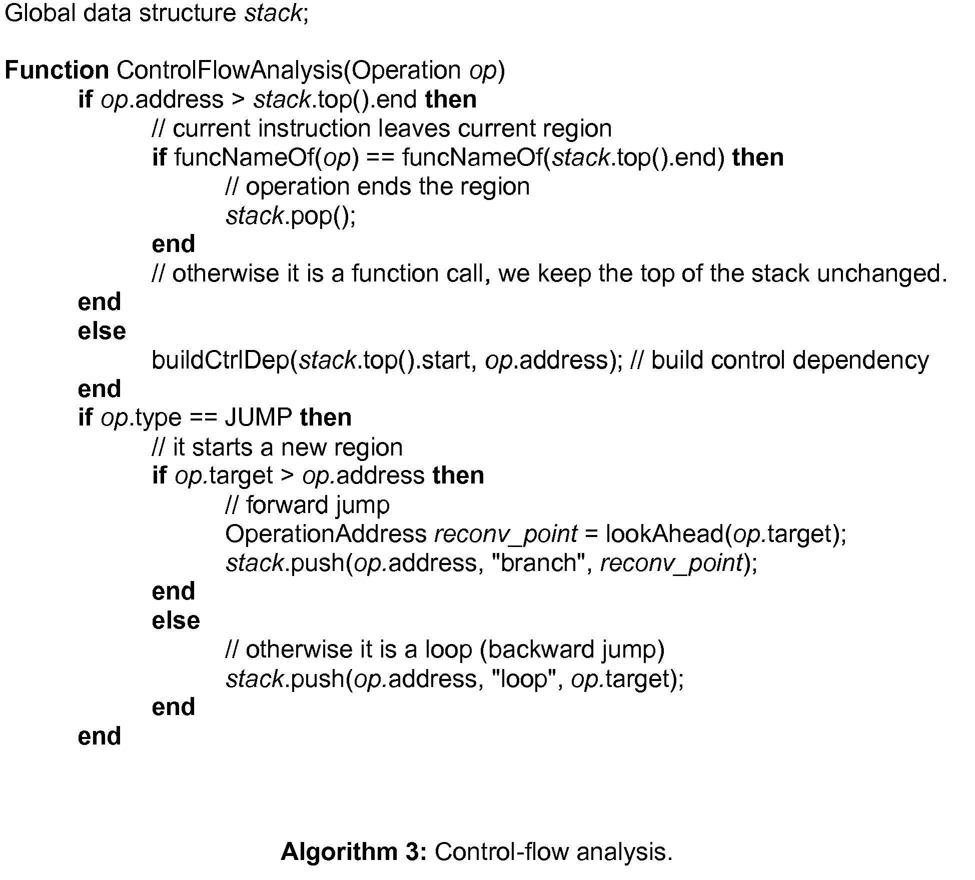

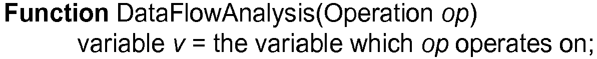

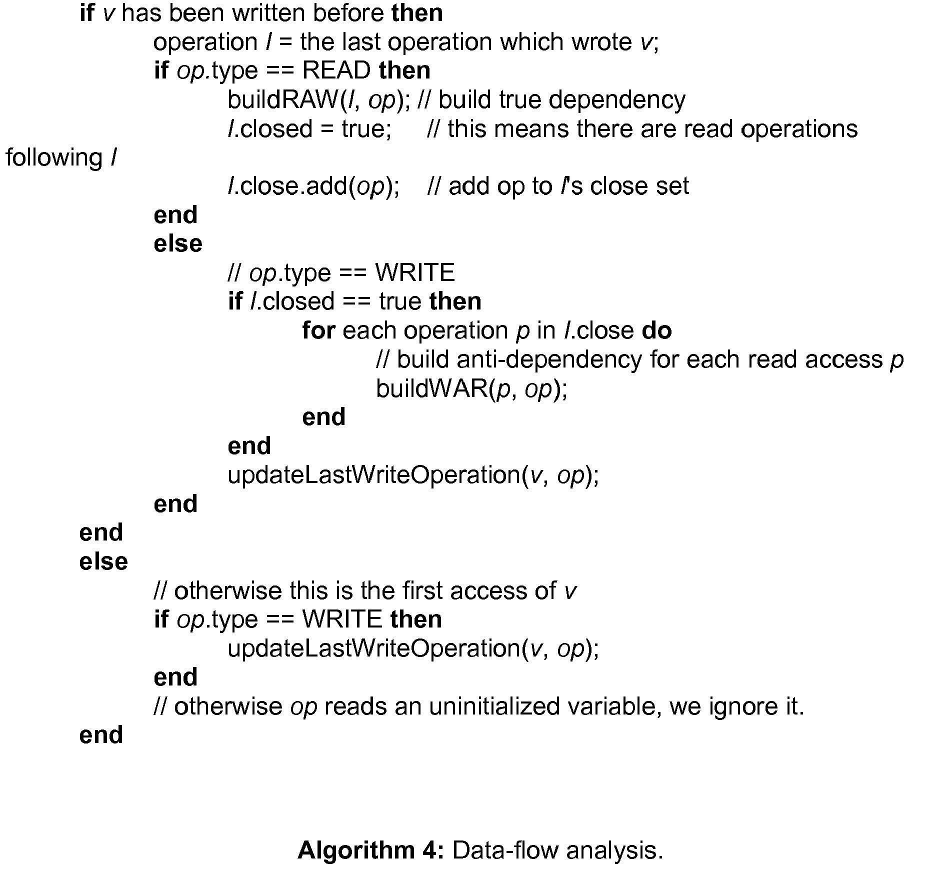

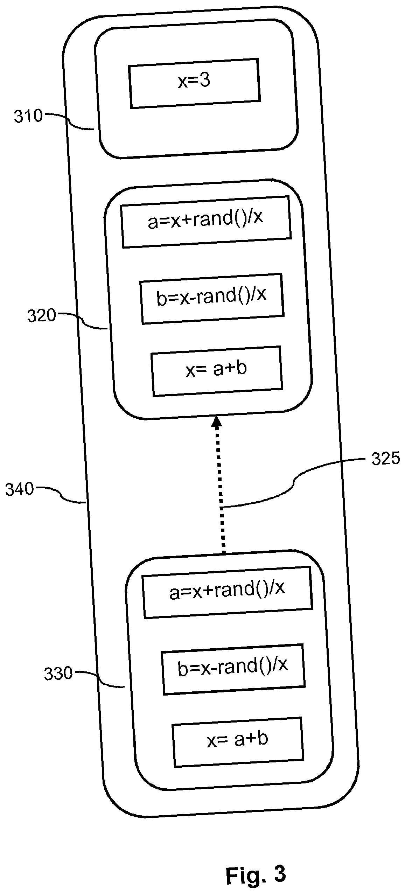

To better understand rule 3 consider the CU graph of a loop. What if the graph starts with a normal CU node but not an INIT node? This means, some variable is read first and then written. This is ok for the first iteration because this variable may be initialized by previous operations outside the loop. But what will happen for the second iteration? It will read the value produced by the first iteration, resulting in true dependencies between iterations. This means the iterations of the loop cannot trivially run in parallel. A question that might be raised here is what if the variable is read-only? There is no INIT node preceding its CU and the loop can be parallelized. It seems that rule 3 is violated. Let us review the definition of a CU: "CUs follow the read-compute-write pattern: a program state is first read from memory, the new state is computed, and finally written back." Suppose the read-only variable is x. There is actually no CU for x because x is never written in this loop! Such variables never affect parallelism so they are simply ignored. Meanwhile, write operations outside the loop cannot form a CU with the read inside because a CU cannot exceed the boundary of a control region, in this case the loop body. Further details are discussed with respect to Fig. 3.

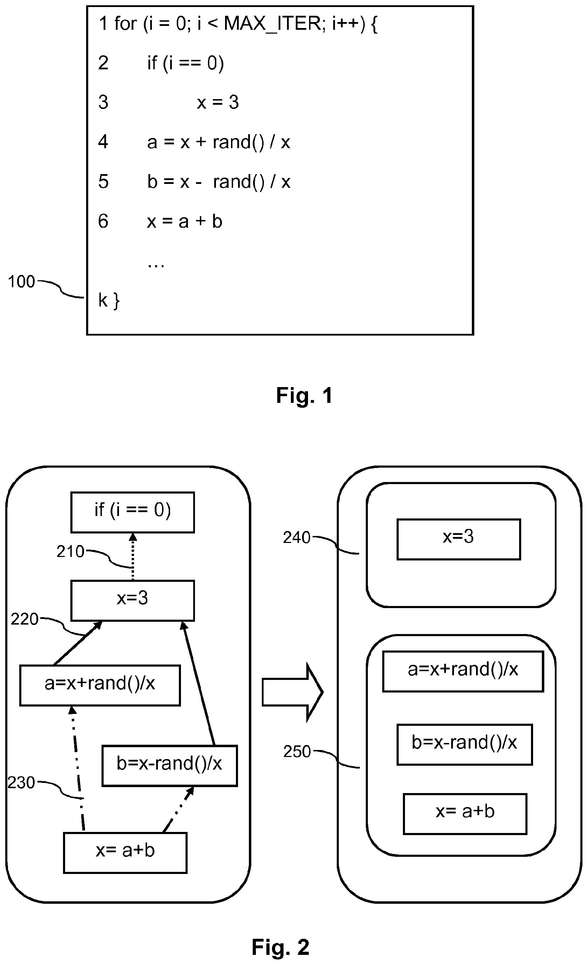

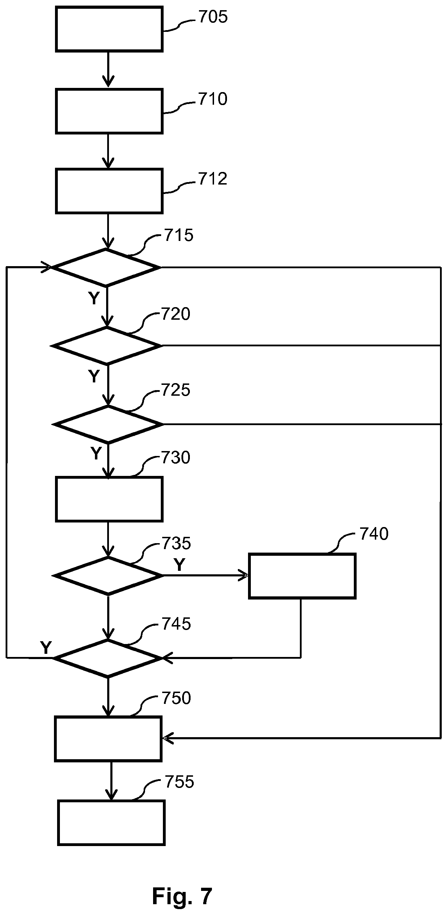

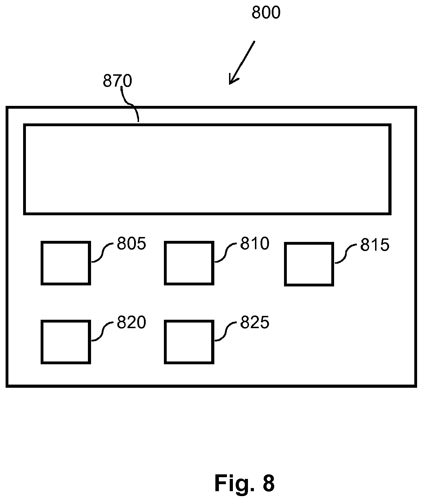

Fig. 1 shows a sequential code section 100. The pattern embodied by this code section is typical for programs that compute iteratively. It contains several control and data dependencies. Data dependencies fall into one of four categories: true dependencies (read after write or short RAW), anti-dependencies (write after read or short WAR), output dependencies (write after write or short WAW) and input dependencies (read after read or short RAR) as discussed above. In the method depicted in Fig. 7 or parallelization detection device 700 according to the invention depicted in Fig. 8 instrumentation calls are inserted for all reads and writes of memory and registers (LOAD/STORE and GET/PUT, respectively) to track data dependencies in shadow memory, which is provided by means of the memory means 805 depicted in Fig. 8. Data dependencies are established when a write operation occurs. WARs connect the instructions inside CUs, but they cannot occur between CUs. For WAW, the first write is used to terminate the CU and the value written by the last write is kept, and all write operations in between are ignored. Since RARs do not prevent parallelization, they can be ignored. Finally, only RAWs are left to be recorded as dependencies between CUs. To identify data dependencies all memory accesses of the sequential program are tracked. For every variable a field called last write operation is maintained within the memory means 805 shown in Fig.8, which is updated whenever the variable is written. For each read operation between two write operations a RAW dependency between the read operation and the last write operation is built. WAR dependencies are built between those reads and the current write operation. This analysis is done during the execution of the sequential program and forms the basis of the described parallelism detection.

Fig. 2 shows an example regarding the detection of a CU based on the sequential code section shown in Fig. 1. Variable x is first initialized and then updated several times as the loop iterates. Following the definition of a CU, one computation of x terminates at line 6 of Fig. 1. Note that CUs are not allowed to cross control-region boundaries, meaning that a CU will not combine the accesses to x in all iterations. Thus, whenever a new iteration starts, a new CU will be created for the specific iteration as shown in Fig. 3. On the left side of Fig. 2, the detection of CUs is depicted in more detail. From line 4 to line 6 as listed in Fig. 1, x is read before a new value for x is computed and finally written. There is a true dependency 220 (RAW) between lines 4, 5 and line 3, while there is an anti-dependency 230 (WAR) between line 6 and both line 4 and 5. A CU 250 is thus built for the computation of x as shown on the right side of Fig. 2. Furthermore, the first write of x in line 3 without the "if-instruction" starting the loop is identified as initialization node 240. Such initialization nodes may be used to start the detection of CUs within a certain code section. The dependency between line 2 and 3 depicted in Fig. 1 is a control dependency 210 which is used for detecting control region boundaries. A control dependency between two instructions opᵢ and opᵢ₊₁ exists if opᵢ₊₁ is conditionally guarded by opᵢ as discussed above. In order to track control dependencies at runtime, we look for jump instructions to find branches and loops in the sequential program. The control dependencies are detected by means of a look-ahead technique. Before the real branch is executed, we follow all possible branches first. This look-ahead is terminated as soon as the loop or branch is finalized. The look-ahead is performed in a special mode, where only control dependencies are determined.

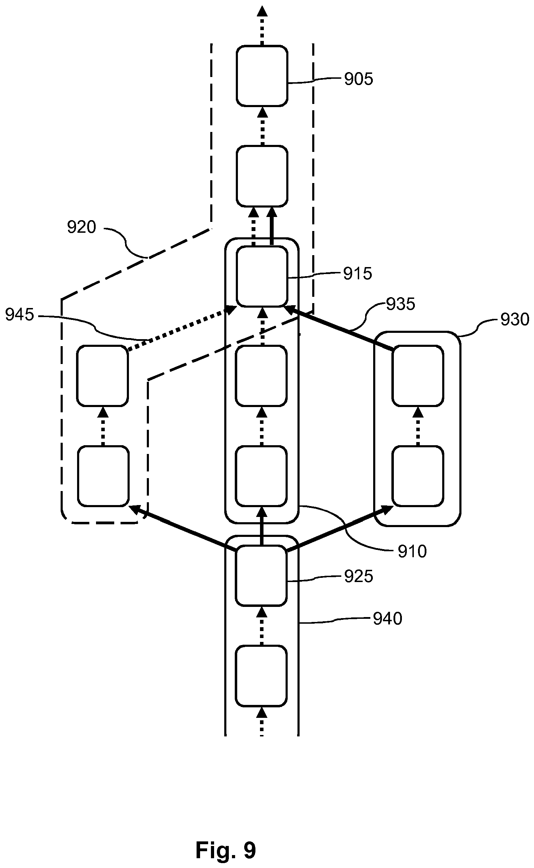

Fig. 3 shows that after detecting a computational unit 1 (CU₁) 320 representing together with initialization node 310 a first iteration in the loop shown in Fig. 1 and a second computational unit 2 (CU₂) 330 representing a second iteration both CU₁ and CU₂ are linked to a chain of computational units. The variable written at the end of CU₁ is read by CU₂. Link 325 thus points from CU₂ to CU₁. CU₂ depends on CU₁ and cannot run in parallel with CU₁. The same holds for all subsequent CUs reading variable x computed by the preceding iterations. CU₁ and CU₂ and all CUs representing subsequent iterations of the loop shown in Fig. 1 are thus preferably linked together, resulting in one CU chain 340 which should finally be a closed CU chain depending on no other CU, as discussed, for example, in the description of Fig. 9 below. It should be remarked that initialization nodes such as 310 are no CUs, thus dependencies between CUs and initialization nodes may exist. Write after write (WAW) dependencies between iterations are no obstacle on the way to parallelization because resolving WAWs is easy. In addition, adding synchronization instructions to protect shared data does not significantly lower the speedup if the amount of work in each iteration is big enough. Loops having only WAW dependencies are thus parallelizable.

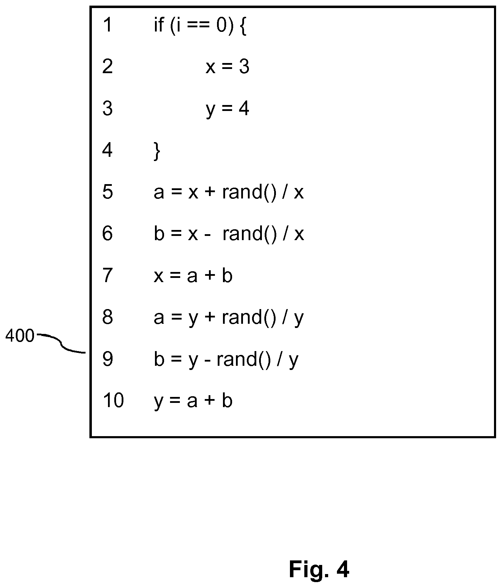

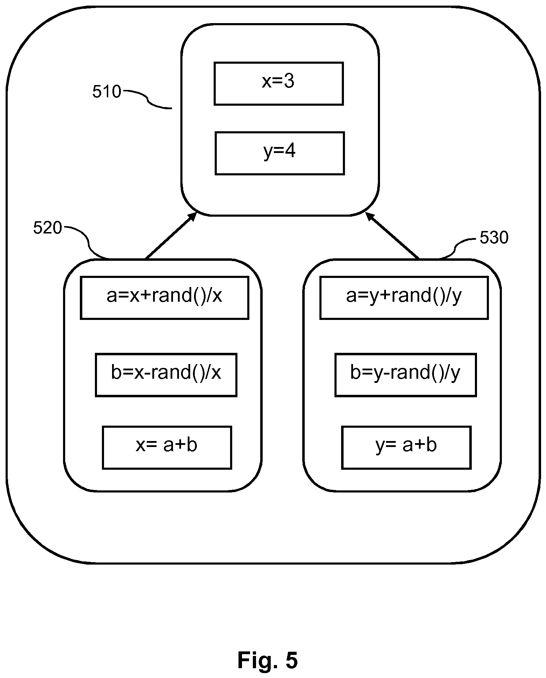

Fig. 4 shows a sequential code section with potential task parallelism 400. There, an additional variable y is introduced. The calculations of x and y are independent in this example. The corresponding CU graph is depicted in Fig. 5. Two computational units 520 and 530 are detected whereby both computational units depend on one initialization node 510. In spite of this dependency computational unit 3 (CU₃) 520 and computational unit 4 (CU₄) 530 are independent from each other. CU₃ does only read and subsequently write variable x initialized in initialization node 510 and CU₄ does only read and subsequently write variable y initialized in initialization node 510. Both computational units can thus be made run in parallel. The parallelization can be done, for example, by splitting the initialization node 510 in two separate initialization nodes one comprising variable x the other variable y. In an alternative approach, only one initialization node 510 will be used and the sequential program is parallelized after initialization node 510.

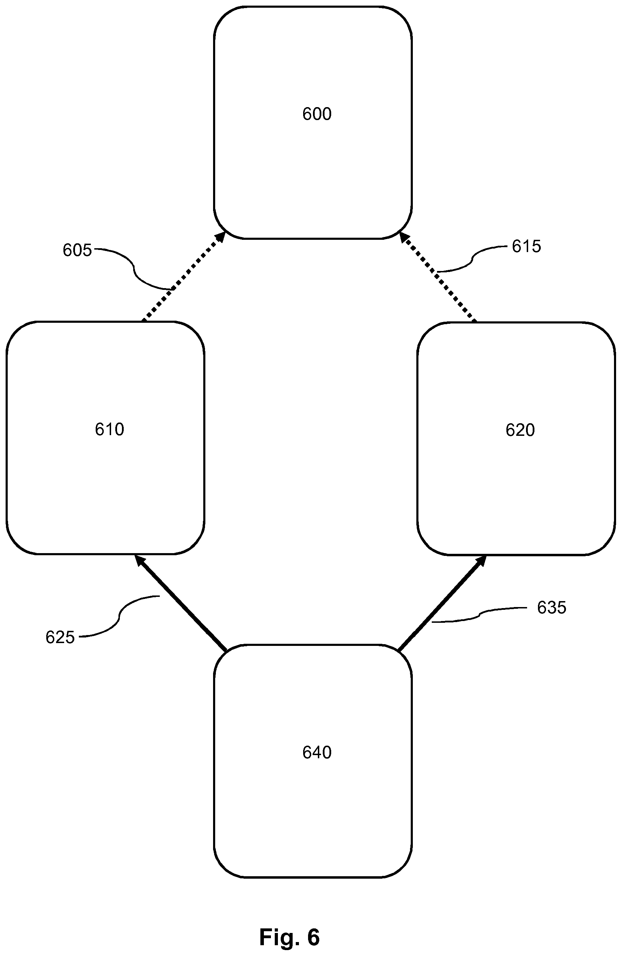

Fig. 6 shows another example of dependencies between computational units. CU₆ 610 and CU₇ 620 depend on CU₅ 600 but CU₆ 610 and CU₇ 620 do not depend on each other. CU₆ 610 can thus be linked by first link 605 to CU₅ 600 and CU₇ 620 can be linked by second link 615 to CU₅ 600. CU₆ 610 and CU₇ 620 both linked with CU₅ 600 can be executed in parallel. CU₈ 640 depends by means of first dependency 625 on CU₆ 610 and by means of second dependency 635 on CU₇ 620. CU₆ 610 linked with CU₅ 600 and CU₇ 620 linked with CU₅ 600 have to be executed prior to the execution of CU₈ 640. Consequently it has to be indicated that there is a synchronization point prior to CU₈ 640 such that a corresponding synchronization instruction has to be added to the parallel version of the sequential program. In fact there are two options. The first option is to link both CU₆ 610 and CU₇ 620 to CU₅ 600. This means that CU₅ 600 has to be duplicated, meaning executed twice if the resulting closed CU chains are executed in parallel. This wouldn't be desirable if executing CU₅ 600 would require quite some computation time. The second option is to execute CU₅ 600 and CU₆ 610 and CU₇ 620 would form closed CU chains on their own without being linked to CU₅ 600. From an economic point of view it would thus make sense not to link two, three, for or more CUs to a CU if the two, three, for or more CUs depend on this CU, as depicted with respect to CU₆ 610 and CU₇ 620 depending on CU₅ 600. Anyhow, both options are possible.

Fig. 7 shows a process flow of detecting closed CU chains and thus options to parallelize a sequential program. In step 705 a sequential program is loaded to a parallelization detection device 800 depicted in Fig. 8. In step 710 the sequential program is executed under control of the parallelization detection device 800.

The tool used for this purpose is a parallelization computer program implemented on top of Valgrind 3.7.0, an instrumentation framework for building dynamic analysis tools as disclosed in N. Nethercote and J. Seward, "Valgrind: a framework for heavyweight dynamic binary instrumentation," SIGPLAN Not., vol. 42, no. 6, pp. 89-100, Jun. 2007, which is incorporated by reference. The parallelization computer program runs on any suitable computer system, together constituting at least a part of parallelization detection device 800. The parallelization detection device 800 first translates the binary code to a special intermediate representation called VexIR. Before the parallelization detection device 800 executes the sequential program on a synthetic CPU in step 710, the parallelization detection device 800 automatically inserts instrumentation to track memory accesses. Hence, the parallelization detection device 800 does not require any annotations of the source code and deals only with the binary executable with debug information added. At runtime, the parallelization detection device 800 records all memory accesses in shadow memory which may be implemented in memory means 805 depicted in Fig. 8, while performing the detection of potential parallelism on-the-fly.

In step 712 control regions are determined. A look-ahead technique is used to determine a re-convergence point. The re-convergence point is the point where the different branch alternatives of the sequential program end and unconditional execution resumes. Before the real branch is executed, every possible branch is tried first, and this look-ahead is terminated when a re-convergence point is encountered, which is the first instruction that comes after a control region. The re-convergence point is searched for in "look-ahead" mode. This means, while searching, all instrumentation related to memory accesses is disabled and all intermediate values and program states are stored separately on a scratchpad. After identifying the re-convergence point, the real branch is executed in normal mode.

In step 715 it is checked whether there is a program step in the sequential program of reading a first program state from a memory device. The memory device may also be part of the memory means 805. In step 720 it is checked whether there is a subsequent program step of computing a second program state based on the first program state followed by a further step 725 checking whether there is a further program step of writing the second program state to the memory device. The second program state may overwrite the first program state. If all steps 715, 720 and 725 are performed and in step 725 a step of writing the second program state to the memory device can be detected, the instructions causing these program steps are indicated in step 730 as computational units 320, 330, 520, 530, 600, 610, 620, 640, 905.

In step 735 it is checked whether the detected computational unit depends on a previously detected computational unit as, for example CU₂ 330 depends on CU₁ 320. In the case that dependencies can be found both dependent CUs are linked in step 740 to one CU chain if the detected computational unit does not depend on more than one CU. After linking the dependent CUs it is checked in step 745 if there are further instructions which may comprise further CUs. If there are further instructions step 715 and the following steps are repeated as described above until there are no further instructions which may comprise one or more CUs. If there are no such further instructions the final CU chain 340 is a closed CU chain (or there is no CU at all).

In step 750 the computation time is determined which is needed to execute the detected closed CU chain. The latter may be done by monitoring the time of execution by means of the parallelization detection device 800 and deriving a relative measure for the computation time of the closed CU chain in comparison to other closed CU chains executed on the same parallelization detection device. Alternatively or in addition, the number of closed CU chains within a loop and/or the number of instructions comprised by the closed CU chains are determined as discussed above in order to determine the computation time of the closed CU chain or the loop. Both the closed CU chain and the computation time are finally indicated for further processing in step 755. The further processing of indicated CUs and optionally related computation times may comprise manual coding of a parallel version of the sequential program by means of a computer programmer.

In Fig. 8 a principal sketch of a parallelization detection device 800 is shown. The parallelization detection device 800 comprises memory means 805 for loading the sequential program, providing shadow memory during execution of the sequential program and finally storing the results of the detection process such as, for example, the source-code location of a closed CU chain, number of instructions and lines of code comprised by the closed CU chain, number of iterations belonging to the closed CU chain, optionally synchronization points and a measure of the computation time to execute the closed CU chain. The parallelization detection device 800 further comprises control means 810 to execute the sequential program and to initiate the storage of information in memory means 805. Furthermore, detection means 815 and linking means 820 are comprised by the parallelization detection device 800 for determining control regions and detecting closed CU chains within the control regions as described above. Control means 810 and/or detection means 815 may be used to determine the computation time and/or number of independent iterations and/or number of instructions with respect to each closed CU chain detected within the sequential program. Finally the detected closed CU chains and optionally the related computation time, number of independent iterations and number of instructions is indicated by means of indication means 870, being in the shown case a display informing a computer programmer about potential parallelism and related information. The parallelization detection device 800 may further comprise synchronization means 825 for detecting a synchronization point of the sequential program.

Fig. 9 shows a more complex example of at least a part of a CU graph of a sequential program including dependencies and links between CUs. Nine CUs are shown. Usual CUs as computational unit 9 (CU₉) 905 depend on only one CU and are only dependent on one CU. A branching point 915 is a CU where at least two subsequent CUs depend on. A re-convergence point 925 is a CU depending on at least two preceding CUs. There may be cases where a CU may be both branching point and re-convergence point.

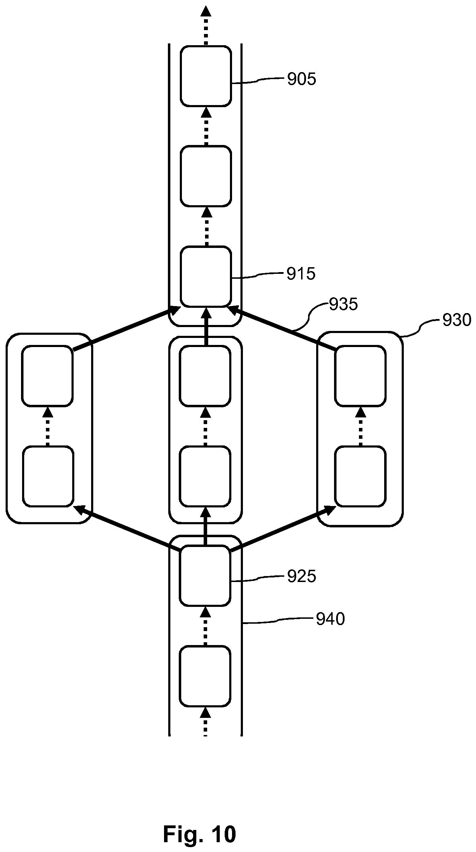

Three different approaches of building closed CU chains are shown. The first closed CU chain 910 according to the first approach comprises the branching point 915 and two subsequent CUs prior to the re-convergence point 925. The second closed CU chain 920 according to the second approach comprises the branching point 915, at least two CUs including CUg prior to the branching point 915 and two subsequent CUs prior to the re-convergence point 925. There is thus a link 945 between branching point 915 and the subsequent CU within the first closed CU chain. The third closed CU chain according to the third approach comprises only two CUs wherein one of the two CUs depends on the branching point 915 indicated by means of a dependency to branching point 935 and the re-convergence point 925 depends on the other CU of the third closed CU. Fig. 9 shows three different approaches with respect to the formation of closed CU chains. Within an efficient parallelization strategy only one of the approaches represented by the first closed CU chain 910, second closed CU chain 920 and third closed CU chain 930 would be realized in order to arrange data dependencies correctly. These options are indicated by the double arrow pointing from branching point 915 to the preceding CU. The solid arrow indicates a dependency with respect to the first closed CU chain 910, and the dotted arrow indicates a link within the second closed CU chain 920. A mixed approach using more than one of the options may be undesirable in a reliable parallelization approach. Fig. 10 shows only closed CUs according to the third approach. There is no overlap between closed CUs such that replication of CUs is avoided.

The branching point 915 has to be executed as often as comprised in the closed CU chains. The closed CU chains would overlap. This can be avoided by introducing a rule that a branching point is the last CU of a closed CU chain. In this case at least CU₉ 905 (there may be CUs prior to CU₉ 905), the CU between CU₉ 905 and the branching point 915 would build one closed CU chain executed prior to the closed CU chains following after branching point 915 as, for example, indicated by closed CU chain. There wouldn't be any overlap between closed CU chains in this case. This would have the advantage that the timing of execution of the closed CU chains is much easier. The branching point would indicate the end of a closed CU chain, which may help to program a parallel version of the sequential program. Furthermore, replication of CUs is avoided.

All closed CU chains end prior to the re-convergence point 925 because the CU of re-convergence point 925 needs the result of the preceding closed CU chains converging at re-convergence point 925. For example, the results of closed CU 930 and two further closed CUs according to the third approach starting after branching point 915 and ending with the last CU prior to the re-convergence point 925 as depicted in Fig. 10 are needed. Alternatively, the results of three closed CUs like closed CU 910 according to the first approach or the results of three closed CUs like closed CU 920 according to the second approach are computed depending on the chosen approach. A synchronization instruction has thus to be introduced preferably directly prior to the re-convergence point 925 in all approaches. Closed CU chains form a linear chain of CUs without any branches or ambiguities. Anyhow, depending on the approach this may comprise replicated execution of CUs as, for example, the replicated execution of CU 915 if the closed CUs within the branch all comprise CU 915 like closed CU 910.

The disclosed method, parallelization detection device 800 and computer program product were validated and benchmarked by adopting parallelism detected by the parallelization detection device 800. Four sequential programs (Histogram visualization, Mandelbrot set, Simulation of light propagation using Monte Carlo algorithm and Artificial Neural Network training) were processed and the detected parallelisms were used to program a parallel version of the programs. The parallel versions of the programs, executed with 4 threads, were between 2.02 times and 3.67 times faster than the sequential version when the programs were run on a server with 2 x 8-core Intel Xeon E5-26502 GHz processors with 32 GB memory, running Ubuntu 12.04 (64-bit server edition). All test programs were compiled with GCC 4.6.3.

Furthermore, known parallel implementations of other four programs (parsec.blackscholes, parsec.streamcluster, gzip 1.3.5 and bzip2 .02.) were compared with the closed chain of computational units or parallelism automatically detected in sequential versions of said programs by means of the parallelization detection device 800. It could be shown that the main parallelism in the parallel versions of the four programs could be automatically detected and indicated.

The described method, parallelization detection device 800 and computer program product for providing parallelism in sequential programs may be used to support parallelization of sequential programs or enable automatic parallelization of such sequential programs. It could be experimentally demonstrated that the present invention is able to detect the most important code locations to be parallelized.

While the invention has been illustrated and described in detail in the drawings and the foregoing description, such illustration and description are to be considered illustrative or exemplary and not restrictive.

From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. The mere fact that certain measures are recited in mutually different dependent claims does not indicate that a combination of these measures cannot be used to advantage.
Any reference signs in the claims should not be construed as limiting the scope thereof.

### List of reference numerals:

- 100: sequential code section
- 210: control dependency
- 220: true dependency
- 230: anti-dependency
- 240: initialization node
- 250: computational unit (CU)
- 310: initialization node
- 320: computational unit 1 (CU₁)
- 325: link
- 330: computational unit 2 (CU₂)
- 340: chain of computational units
- 400: sequential code section with task parallelism
- 510: initialization node
- 520: computational unit 3 (CU₃)
- 530: computational unit 4 (CU₄)
- 600: computational unit 5 (CU₅)
- 605: first link
- 610: computational unit 6 (CU₆)
- 615: second link
- 620: computational unit 7 (CU₇)
- 625: first dependency
- 635: second dependency
- 640: computational unit 8 (CU₈)
- 705: load sequential program
- 710: execute sequential program
- 712: determine control region
- 715: detect program step of reading a first program state from a memory device
- 720: detect program step of computing second program state based on first program state
- 725: detect program step of writing second program state to memory device
- 730: CU detected
- 735: check whether detected CU depends on another CU
- 740: link dependent CU with CU it depends on
- 745: check whether there are further instructions
- 750: determine computation time needed to execute closed CU chain
- 755: indicate closed CU chain and computation time 700
- 800: parallelization detection device
- 805: memory means
- 810: control means
- 815: detection means
- 820: linking means
- 825: synchronization means
- 870: indication means
- 905: computational unit 9 (CU₉)
- 910: first closed CU chain
- 915: branching point
- 920: second closed CU chain
- 925: re-convergence point
- 930: third closed CU chain
- 935: dependendency to branching point
- 940: fourth closed CU chain
- 945: link to branching point

## Claims

1. A method of detecting parallelism in a sequential program, the method comprising the steps of:
- loading the sequential program to a parallelization detection device (800);
- executing the sequential program under control of the parallelization detection device (800);
- automatically determine a control region in the sequential program by means of the parallelization detection device (800), wherein the control region is defined by control region boundaries, which are defined by re-convergence points;
- automatically detecting within the control region a computational unit (250, 320, 520, 600), Cu, in the sequential program by means of the parallelization detection device (800), by means of
• automatically detecting a program step of reading a first program state from a memory device;
• automatically detecting a program step of computing a second program state based on the first program state; and
• automatically detecting a program step of writing the second program state to the memory device;
- building a CU-graph, wherein an edge within the graph defines a true data dependency of CUs,
- automatically indicating those CUs (250, 320, 520, 600) within the control region by means of the parallelization detection device (800) as being parallel executable which are on different paths along the edges or within independent closed CU chains;
- automatically detecting at least a second computational unit (330, 610, 620), whereby a first computational unit (250, 320, 600) is started in the sequential program prior to the second computational unit (330, 610, 620);
- automatically determining whether the second computational unit (330, 610, 620) is a dependent computational unit comprising a program step of reading the second program state computed by the first computational unit (250, 320),
- automatically linking the first computational unit (250, 320, 600) and the second computational (330, 610, 620) to a first chain of computational units if the second computational unit depends on the first computational unit and the second computational unit does not depend on another computational unit,
- automatically determining whether a further computational unit started after the second computational unit (330, 530, 610, 620) depends on the first chain of computational units and link the further computational unit to the first chain of computational units if the further computational unit depends on the first chain of computational units and the further computational unit does not depend on another computational unit; and
- automatically repeating the step of determining and linking further dependent computational units until there is no further dependent computational unit or until determining that the further dependent computational unit is a computational unit (640, 925) depending on at least two other dependent computational units (610, 620) such that the final chain of computational units is a first closed chain of computational units.

2. The method according to claim 1, the method comprising the further step of:
- automatically repeating the step of determining and linking further dependent computational units until determining that the further dependent computational unit (600) is a computational unit which at least two other dependent computational units (610, 620) depend on such that the final chain of computational units is a first closed chain of computational units.

3. The method according to claim 1 or 2, the method comprising the further steps of:
- automatically detecting at least a second closed chain of computational units; and
- automatically indicating by means of the parallelization detection device (800) if the second closed chain of computational units is independent of the first closed chain of computational units.

4. The method according to claim 3, the method comprising the further steps of:
- automatically detecting a synchronization point; and
- automatically indicating by means of the parallelization detection device (800) the synchronization point.

5. The method according to any one of the claims 4 to 7, the method comprising the further steps of:
- automatically detecting by means of the parallelization detection device (800) a computation time needed to execute the first closed chain of computational units and/or the at least second closed chain of computational units; and
- automatically indicating the computation time by means of the parallelization detection device (800).

6. The method according to claim 5, wherein the step of automatically detecting the computation time comprises the step of automatically detecting the number of iterations the detected first and/or at least second closed chain of computational units are executed.

7. The method according to any one of claims 5 or 6, wherein the step of automatically detecting the computation time comprises the step of automatically detecting the number of instructions comprised by the first and/or at least second closed chain of computational units.

8. A parallelization detection device (800) for detecting parallelism in a sequential program, the parallelization detection device (800) comprising memory means (805) for loading a sequential program, the parallelization detection device (800) further comprising control means (810) for executing the sequential program under control of the control means (810), the parallelization detection device (800) further comprising detection means (815) for determining a control region,
wherein the control region is defined by control region boundaries, which are defined by re-convergence points;
the detection means (815) being further adapted to detect at least one computational unit (250, 320, 330, 520, 530), CU, within the control region of the sequential program, whereby at least one computational unit (250, 320, 330, 520, 530) comprises a program step of reading a first program state from a memory device, a program step of computing a second program state based on the first program state and a program step of writing the second program state to the memory device,
means for building a CU-graph, wherein an edge within the graph defines a true data dependencie of CUs,
and the parallelization detection device (800) further comprising indication means (870) for indicating those the computational units (250, 320, 330, 520, 530) as being parallel executable, which are on different paths along the edges or within independent closed CU- chains,
the detection means being further adapted to determine whether at least a second computational unit (330, 610, 620) started after a first computational unit (250, 320, 520, 600) is comprised in the sequential program, the second computational unit (330, 610, 620) comprises a program step of reading the second program state computed by the first computational unit (250, 320, 520, 600), the parallelization detection device (800) further comprising linking means (820) for linking the first and the at least second computational (330, 610, 620) unit to a chain of computational units if the at least second computational unit (330, 610, 620) comprises a program step of reading the second program state computed by the first computational unit and the at least second computational unit (330, 610, 620) comprises no program step of reading the second program state of a further computational unit (640), and the indication means (870) being adapted to indicate the chain of computational units as closed chain of computational units if no further computational unit comprises a program step of reading a second program state of the chain of computational units.

9. The parallelization detection device (800) according to claim 8, the parallelization detection device (800) further comprising synchronization means for detecting a synchronization point of the sequential program.

10. A computer program product comprising code means for producing the steps of the method as claimed in any of claims 1 - 7 when run on the parallelization detection device (800) of claim 8.

## Patentansprüche

1. Verfahren zum Erfassen von Parallelität in einem sequentiellen Programm, wobei das Verfahren die folgenden Schritte umfasst:
- Laden des sequentiellen Programms in eine Parallelisierungserkennungsvorrichtung (800);
- Ausführen des Sequentiellen Programms unter Kontrolle der Parallelisierungserkennungsvorrichtung (800);
- automatisches Bestimmen eines Kontrollbereichs im Sequentiellen Programm mittels der Parallelisierungserkennungsvorrichtung (800), wobei der Kontrollbereich durch Kontrollbereichsgrenzen definiert ist, die durch Re-Konvergenzpunkte definiert sind;
- automatisches Erfassen einer Berechnungseinheit (250, 320, 520, 600), Cu, im sequentiellen Programm innerhalb des Kontrollbereichs mittels der Parallelisierungserkennungsvorrichtung (800) mittels
• automatischen Erkennen eines Programmschrittes zum Lesen eines ersten Programmzustands von einer Speichervorrichtung;
• automatisches Erkennen eines Programmschritts zum Berechnen eines zweiten Programmzustands basierend auf dem ersten Programmzustand; und
- automatisches Erkennen eines Programmschrittes zum Schreiben des zweiten Programmzustands in die Speichervorrichtung;
- Erstellen eines CU-Graphen, wobei eine Kante innerhalb des Graphen eine echte Datenabhängigkeit von CUs definiert,
- automatisch die CUs (250, 320, 520, 600) innerhalb des Kontrollbereichs mittels der Parallelisierungserkennungsvorrichtung (800) als parallel ausführbar kennzeichnen, die sich auf unterschiedlichen Pfaden entlang der Kanten oder innerhalb unabhängiger geschlossener CU-Ketten befinden;
- automatisches Erkennen mindestens einer zweiten Berechnungseinheit(330, 61 oder 620), wobei eine erste Berechnungseinheit (250, 320, 600) im sequentiellen Programm vor der zweiten Berechnungseinheit (330, 610, 620) gestartet wird;
- automatisches Bestimmen, ob die zweite Berechnungseinheit (330, 610, 620) eine abhängige Berechnungseinheit ist,
die einen Programmschritt zum Lesen des zweiten Programmzustands umfasst, der durch die erste Berechnungseinheit (250, 320) berechnet wird;
- automatisches Verbinden der ersten Berechnungseinheit (250, 320, 600) und der zweiten Berechnungseinheit (330, 610, 620) mit einer ersten Kette von Berechnungseinheiten, wenn die zweite Berechnungseinheit von der ersten Berechnungseinheit abhängt und die zweite Berechnungseinheit nicht von einer anderen Berechnungseinheit abhängt,
- automatisches Bestimmen, ob eine weitere Berechnungseinheit, die nach der zweiten Berechnungseinheit (330, 530, 610, 620) gestartet wurde, von der ersten Kette von Berechnungseinheiten abhängt und die weitere Berechnungseinheit mit der ersten Kette von Berechnungseinheiten verknüpft, wenn die weitere Berechnungseinheit von der ersten Kette von Berechnungseinheiten abhängt und die weitere Berechnungseinheit nicht von einer anderen Berechnungseinheit abhängt; und
- automatisches Wiederholen des Schrittes des Bestimmens und Verknüpfens weiterer abhängiger Berechnungseinheiten, bis es keine weitere abhängige Berechnungseinheit mehr gibt oder bis bestimmt wird, dass die weitere abhängige Berechnungseinheit eine Berechnungseinheit (640, 925) ist, die von mindestens zwei weiteren abhängigen Berechnungseinheiten (610, 620) abhängig ist, sodass die endgültige Kette von Berechnungseinheiten eine erste geschlossene Kette von Berechnungseinheiten ist.

2. **Das** Verfahren nach Anspruch 1, wobei das Verfahren den weiteren Schritt umfasst:
- automatisches Wiederholen des Schrittes des Bestimmens und Verbindens weiterer abhängiger Berechnungseinheiten, bis bestimmt ist, dass die weitere abhängige Berechnungseinheit (600) eine Berechnungseinheit ist, von der mindestens zwei weitere abhängige Berechnungseinheiten (610, 620) abhängig sind, so dass die endgültige Kette von Berechnungseinheiten eine erste geschlossene Kette von Berechnungseinheiten ist.

3. Das Verfahren nach Anspruch 1 oder 2, wobei das Verfahren umfasst
- automatisches Erkennen mindestens einer zweiten geschlossenen Kette von Berechnungseinheiten; und.
- automatisch mittels der Parallelisierungserkennungsvorrichtung (800) Anzeigen, ob die zweite geschlossene Kette von Berechnungseinheiten unabhängig von der ersten geschlossenen Kette von Berechnungseinheiten ist.

4. Verfahren nach Anspruch 3, wobei das Verfahren die weiteren Schritte umfasst von:
- automatisches Erkennen eines Synchronisationspunktes; und
- das automatische Anzeigen des Synchronisationspunktes mittels der Parallelisierungserkennungsvorrichtung (800).

5. Verfahren nach einem der Ansprüche 4 bis 7, wobei das Verfahren die weiteren Schritte umfasst ;
- automatisches Erfassen einer Rechenzeit, die zum Ausführen der ersten geschlossenen Kette von Berechnungseinheiten und/oder der mindestens zweiten geschlossenen Kette von Berechnungseinheiten benötigt wird, mittels der Parallelisierungserkennungsvorrichtung (800); und
- automatisches Anzeigen der Berechnungszeit mittels der Parallelisierungserkennungsvorrichtung (800).

6. Verfahren nach Anspruch 5, wobei der Schritt zum automatischen Erfassen der Berechnungszeit den Schritt zum automatischen Erfassen der Anzahl der Iterationen umfasst, wobei die erfasste erste und/oder mindestens zweite geschlossene Kette von Berechnungseinheiten ausgeführt wird*.

7. Verfahren nach einem der Ansprüche 5 oder 6, wobei der Schritt des automatischen Erfassens der Berechnungszeit den Schritt des automatischen Erfassens der Anzahl der Instruktionen umfasst, die durch die erste und/oder mindestens zweite geschlossene Kette von Berechnungseinheiten gebildet werden.

8. Parallelisierungserfassungsvorrichtung (800) zum Erfassen von Parallelität in einem sequentiellen Programm, wobei die Parallelisierungserfassungsvorrichtung (800) Speichermittel (805) zum Laden eines sequentiellen Programms umfasst, wobei die Parallelisierungserfassungsvorrichtung (800) ferner Steuermittel (810) zum Ausführen des sequentiellen Programms unter Kontrolle der Steuermittel (810) umfasst, wobei die Parallelisierungserfassungsvorrichtung (800) ferner Erfassungsmittel (815) zum Bestimmen eines Kontrollbereichs umfasst, wobei der Kontrollbereich durch Kontrollbereichsgrenzen definiert ist, die durch Re-Konvergenzpunkt definiert sind; wobei die Erfassungseinrichtung (815) ferner angepasst ist, um mindestens eine Berechnungseinheit (250, 320, 330, 520, 530), CU, innerhalb des Kontrollbereichs des sequentiellen Programms zu erfassen, wobei mindestens eine Berechnungseinheit (250, 320, 330, 520, 530) einen Programmschritt zum Lesen eines ersten Programmzustands aus einer Speichervorrichtung, einen Programmschritt zum Berechnen eines zweiten Programmzustands basierend auf dem ersten Programmzustand und einen Programmschritt zum Schreiben des zweiten Programmzustands in die Speichervorrichtung umfasst, Mittel zum Erstellen eines CU-Graphen, wobei eine Kante innerhalb des Graphen eine echte Datenabhängigkeit von CUs definiert, und die Parallelisierungserfassungsvorrichtung (800) ferner Anzeigemittel (870) zum Anzeigen dieser Berechnungseinheiten (250, 320, 330, 520, 530) umfasst, die parallele ausführbare sind, die sich auf unterschiedlichen Pfaden entlang der Kanten oder innerhalb unabhängiger geschlossener CU-Ketten befindet, wobei die Erfassungsmittel ferner angepasst sind, um zu bestimmen, ob mindestens eine zweite Berechnungseinheit (330, 610, 62'0), die nach einer ersten Berechnungseinheit (250, 320, 520, 600) gestartet wurde, im sequentiellen Programm enthalten ist, die zweite Berechnungseinheit (330, 610, 620) einen Programmschritt zum Lesen des zweiten Programmzustands umfasst, der von der ersten Berechnungseinheit (250, 320, 520, 600) berechnet wird, wobei die Parallelisierungserfassungsvorrichtung (800) ferner Verbindungsmittel (820) zum Verbinden der ersten und der mindestens zweiten Berechnungseinheit (330, 610, 620) zu einer Kette von Berechnungseinheiten umfasst, wenn die mindestens zweit Berechnungseinheit (330, 610, 620) einen Programmschritt zum Lesen des zweiten Programmzustands, der von der ersten Berechnungseinheit berechnet wird, und die mindestens zweite Berechnungseinheit (330, 610, 620) keinen Programmschritt zum Lesen des zweiten Programmgrammzustands einer weiteren Berechnungseinheit (640) umfasst, und die Anzeigemittel (870) angepasst sind, um die Kette von Berechnungseinheiten als geschlossene Kette von Berechnungseinheiten anzuzeigen, wenn keine weitere Berechnungseinheit einen Programmschritt zum Lesen eines zweiten Programmzustands der Kette von Berechnungseinheiten umfasst.

9. Parallelisierungserfassungsvorrichtung (800) nach Anspruch 8, wobei die Parallelisierungserfassungsvorrichtung (800) ferner Synchronisationsmittel zum Erfassen eines Synchronisationspunktes des sequentiellen Programms umfasst.

10. Computerprogrammprodukt, umfassend Codemittel zum Herstellen der Schritte des Verfahrens, wie in einem der Ansprüche 1- 7 beansprucht, wenn sie auf der Parallelisierungserkennungsvorrichtung (800) nach Anspruch 8 ausgeführt wird.

## Revendications

1. Un procédé de détection de parallélisme dans un programme séquentiel, le procédé comprenant les étapes consistant à:
- charger le programme séquentiel dans un dispositif de détection de parallélisation (800);
- exécuter le programme séquentiel sous le contrôle du dispositif de détection de parallélisation (800);
- déterminer automatiquement une région de contrôle dans le programme séquentiel au moyen du dispositif de détection de parallélisation (800), dans lequel la région de contrôle est définie par des frontières de régions de control, qui sont définies par des points de re-convergence;
- détecter automatiquement au sein de la région de contrôle une première unité de calcul (250, 320, 520, 600), Cu, dans le programme séquentiel au moyen du dispositif de détection de parallélisation (800), au moyen
• d'une détection automatique d'une étape de programme consistant à lire un premier état de programme à partir d'un dispositif de mémoire;
• d'une détection automatique d'une étape de programme consistant à calculer un deuxième état de programme sur la base du premier état de programme; et
• d'une détection automatique d'une étape de programme d'écriture du deuxième état de programme sur le dispositif de mémoire;
- construire un graphe CU, dans lequel une arête au sein du graphe définie une dépendance vraie de données de CUs,
- indiquer automatiquement, au moyen du dispositif de détection de parallélisation (800), les CUs (250, 320, 520, 600) au sein de la région de contrôle étant exécutables en parallèle et qui sont sur différents chemins le long des arêtes ou à l'intérieur de chaînes de CU fermées indépendantes ;
- détecter automatiquement au moins une seconde unité de calcul (330, 610, 620), moyennant quoi un première unité de calcul (250, 320, 600) est démarrée dans le programme séquentiel avant la seconde unité de calcul (330, 610, 620) ;
- déterminer automatiquement si la seconde unité de calcul (330, 610, 620) est une unité de calcul dépendante comprenant une étape de programme consistant à lire le deuxième état de programme calculé par la première unité de calcul (250, 320) ;
- relier automatiquement la première unité de calcul (250, 320, 600) et la deuxième unité de calcul (330, 610, 620) à une première chaîne d'unités de calcul si la deuxième unité de calcul dépend de la première unité de calcul et la seconde unité de calcul ne dépend pas d'une autre unité de calcul,
- déterminer automatiquement si une autre unité de calcul démarrée après la seconde unité de calcul (330, 530, 610, 620) dépend de la première chaîne d'unités de calcul et relier l'unité de calcul supplémentaire à la première chaîne d'unités de calcul si l'unité de calcul supplémentaire dépend de la première chaîne d'unités de calcul et que l'unité de calcul supplémentaire ne dépend pas d'une autre unité de calcul; et
- répéter automatiquement l'étape consistant à déterminer et à relier d'autres unités de calcul dépendantes jusqu'à ce qu'il n'y ait plus d'autre unité de calcul dépendante ou jusqu'à ce que l'on détermine que l'unité de calcul supplémentaire dépendante est une unité de calcul (640, 925) dépendant d'au moins deux autres unités de calcul dépendantes (610, 620), de sorte que la dernière chaîne d'unités de calcul est une première chaîne fermée d'unités de calcul.

2. Le procédé selon la revendication 1, le procédé comprenant l'étape supplémentaire consistant à:
- répéter automatiquement l'étape consistant à déterminer et à relier d'autres unités de calcul dépendantes jusqu'à déterminer que l'unité de calcul dépendante supplémentaire (600) est une unité de calcul dont au moins deux autres unités de calcul dépendantes (610, 620) dépendent de telle sorte que la chaîne finale d'unités de calcul est une première chaîne fermée d'unités de calcul.

3. Le procédé selon la revendication 1 ou 2, le procédé comprenant les étapes supplémentaires consistant à:
- détecter automatiquement au moins une seconde chaîne fermée d'unités de calcul; et
- indiquer automatiquement au moyen du dispositif de détection de parallélisation (800) si la deuxième chaîne fermée d'unités de calcul est indépendante de la première chaîne fermée d'unités de calcul.

4. Le procédé selon la revendication 3, le procédé comprenant les étapes supplémentaires consistant à:
- détecter automatiquement un point de synchronisation; et
- indiquer automatiquement le point de synchronisation au moyen du dispositif de détection de parallélisation (800).

5. Le procédé selon l'une quelconque des revendications 4 à 7, le procédé comprenant les étapes supplémentaires consistant à:
- détecter automatiquement au moyen du dispositif de détection de parallélisation (800) un temps de calcul nécessaire pour exécuter la première chaîne fermée d'unités de calcul et/ou au moins la deuxième chaîne fermée d'unités de calcul; et
- indiquer automatiquement le temps de calcul au moyen du dispositif de détection de parallélisation (800).

6. Le procédé selon la revendication 5, dans lequel l'étape de détection automatique du temps de calcul comprend l'étape de détection automatique du nombre d'itérations lors de la première et/ou au moins d'une seconde chaîne fermée d'unités de calcul détectées.

7. Le procédé selon l'une quelconque des revendications 5 ou 6, dans lequel l'étape de détection automatique du temps de calcul comprend l'étape de détection automatique du nombre d'instructions comprises par la première et/ou au moins une seconde chaîne fermée d'unités de calcul.

8. Un dispositif de détection de parallélisation (800) pour détecter le parallélisme au sein d'un programme séquentiel, le dispositif de détection de parallélisation (800) comprenant des moyens de mémoire (805) pour charger un programme séquentiel, le dispositif de détection de parallélisation (800) comprenant en outre des moyens de commande (810) pour exécuter le programme séquentiel sous la commande du moyen de commande (810), le dispositif de détection de parallélisation (800) comprenant en outre un moyen de détection (815) pour déterminer une région de contrôle,
dans lequel la région de contrôle est définie par des frontières de région de contrôle, qui sont définies par des points de re-convergence ;
les moyens de détection (815) étant en outre adaptés pour détecter au moins une unité de calcul (250, 320, 330, 520, 530), CU, au sein de la région de commande du programme séquentiel, moyennant quoi au moins une unité de calcul (250, 320, 330, 520, 530) comprend une étape de programme consistant à lire un premier état de programme à partir d'un dispositif de mémoire, une étape de programme consistant à calculer un deuxième état de programme sur la base du premier état de programme et une étape de programme consistant à écrire le deuxième état de programme sur le dispositif de mémoire,
des moyens de construction d'un graphe CU, dans lequel une arête au sein du graphe définie une dépendance de données vraie des CUs,
et le dispositif de détection de parallélisme (800) comprenant en outre des moyens indicateurs (870) pour indiquer celles parmi les unités de calcul (250, 320, 330, 520, 530) qui sont exécutables en parallèle, qui sont sur différents chemins le long des arêtes ou à l'intérieur de chaînes de CU fermées indépendantes,
les moyens de détection étant en outre adaptés pour déterminer si au moins une seconde unité de calcul (330, 610, 620) démarrée après une première unité de calcul (250, 320, 520, 600) est comprise dans le programme séquentiel, la seconde unité de calcul (330, 610, 620) comprenant une étape de programme consistant à lire le second état de programme calculé par la première unité de calcul (250, 320, 520, 600), le dispositif de détection de parallélisme (800) comprenant en outre des moyens de liaison (820) pour relier la première et au moins la seconde unité de calcul (330, 610, 620) à une chaine d'unités de calcul lorsque la ou les seconde(s) unité(s) de calcul (330, 610, 620) comporte(nt) une étape de programme consistant à lire le second état de programme calculé par la première unité de calcule et que le ou les seconde(s) unité(s) de calcul (330, 610, 620) comporte(nt) aucune étape de programme consistant à lire le second état de programme d'une unité de calcul supplémentaire (640), et les moyens indicateurs (870) sont adaptés pour indiquer la chaîne d'unités de calcul comme étant une chaine fermée d'unités de calcul si aucune unité de calcul supplémentaire ne comporte une étape de programme consistant à lire un second état de programme de la chaîne d'unités de calcul.

9. Le dispositif de détection de parallélisation (800) selon la revendication 8, le dispositif de détection de parallélisation (800) comprenant en outre des moyens de synchronisation pour détecter un point de synchronisation du programme séquentiel.

10. Un produit programme d'ordinateur comprenant du code informatique pour produire les étapes du procédé selon l'une quelconque des revendications 1 à 7, lorsqu'il est exécuté sur le dispositif de détection de parallélisation (800) de la revendication 8.
